# EUROPÄISCHE PATENTSCHRIFT

(11) **EP 3 134 283 B1**
(45) Veröffentlichungstag und Bekanntmachung des Hinweises auf die Patenterteilung: **17.02.2021**
(21) Anmeldenummer: 15718068.8
(22) Anmeldetag: 04.04.2015
(51) Int. Cl.: B60J 10/80, B60J 10/00, B60R 13/04

(54) **FAHRZEUGKAROSSERIEDICHTUNG MIT ZIERLEISTE**
VEHICLE BODY SEALING WITH TRIM
JOINT D'ÉTANCHÉITÉ DE CAROSSERIE DE VÉHICULE AVEC BANDEAU ENJOLIVEUR

(30) Priorität: 17.04.2014 DE 102014105518
(43) Veröffentlichungstag der Anmeldung: 01.03.2017
(73) Patentinhaber: CQLT SaarGummi Technologies S.à.r.l., 5544 Remich (LU)
(72) Erfinder: THIEL, Daniei, 66701 Beckingen (DE); JUNGMANN, Thomas, 66701 Beckingen (DE)
(74) Vertreter: Patentanwälte Bernhardt / Wolff Partnerschaft mbB
(86) Internationale Anmeldenummer: PCT/EP2015/000727
(87) Internationale Veröffentlichungsnummer: WO 2015/158418

(56) Entgegenhaltungen:
- EP-A1- 2 363 324
- WO-A1-2009/146742
- DE-A1-102010 039 774
- DE-A1-102011 119 102

## Beschreibung

Die Erfindung betrifft eine Anordnung aus einem Dichtungsprofil einer Fahrzeugkarosseriedichtung und einer Zierleiste, die mit dem Dichtungsprofil unter Andrücken der Zierleiste senkrecht zur Profillängsrichtung gegen das Dichtungsprofil verbindbar ist, wobei von der Zierleiste zwei in Leistenlängsrichtung zueinander parallel und im Abstand verlaufende Verbindungsvorsprünge vorstehen, das Dichtungsprofil in Profillängsrichtung verlaufende Rillenausnehmungen zur Aufnahme je eines Verbindungsvorsprungs aufweist, die Verbindungsvorsprünge entgegen der Andruckrichtung und die Rillenausnehmungen in Andruckrichtung gesehen hinterschnitten und die Hinterschneidungen der Rillenausnehmungen durch Rippenvorsprünge für den Eingriff in je eine Hinterschneidung der Verbindungsvorsprünge gebildet sind, wobei die Rippenvorsprünge als beim Andrücken der Zierleiste an das Dichtungsprofil durch die Verbindungsvorsprünge elastisch abbiegbare, in der Verbindungsstellung nach Rückstellung widerhakenartig gegen die Verbindungsvorsprünge vorstehende Zungen ausgebildet sind, wobei der zwischen den Rillenausnehmungen angeordnete Zwischenbereich des Dichtungsprofils, von welchem die Zungen seitlich vorstehen, aus Vollmaterial besteht, und wobei die Verbindungsvorsprünge in Andruckrichtung aufeinander zulaufende Endabschnitte umfassen.

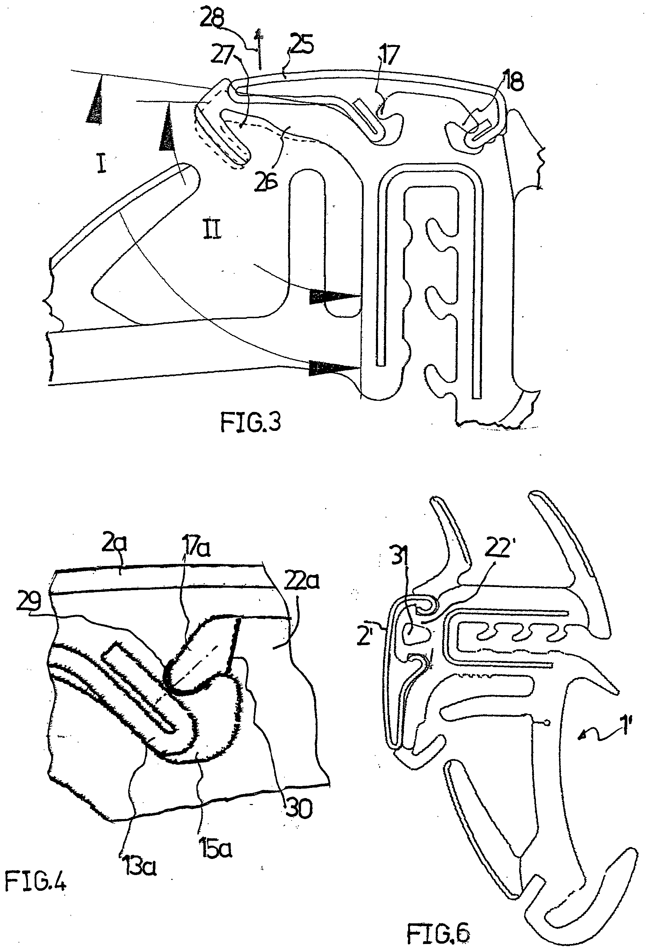

Eine in Fig. 6 gezeigte Anordnung aus einem Dichtungsprofil 1' und einer Zierleiste 2', wie sie ähnlich die DE 10 2011 119 102 A1 beschreibt, ist durch Benutzung bekannt. In einem zwischen Rillenausnehmungen gelegenen Zwischenabschnitt 22' des Dichtungsprofils 1' ist eine Ausnehmung 31 gebildet, die dem Abschnitt 22' Flexibilität verleiht und die Herstellung einer form- und kraftschlüssigen Verbindung zwischen der Zierleiste 2' und dem Dichtungsprofil 1' durch Andrücken der Zierleiste 2' gegen das Dichtungsprofil l'ermöglicht. Weitere, der eingangs erwähnten Anordnung ähnliche Anordnungen mit einer Formschlussverbindung zwischen einem Dichtungsprofil und einer Zierleiste gehen aus der DE 10 2010 039 774 A1 sowie der WO 2009/146742 A1 hervor. Eine Anordnung, die sämtliche der eingangs erwähnten Merkmale aufweist, beschreibt die EP 2 363 324 A1.

Der vorliegenden Erfindung liegt die Aufgabe zugrunde, eine neue Anordnung der eingangs genannten Art aus einem Dichtungsprofil und einer mit dem Dichtungsprofil verbindbaren Zierleiste zu schaffen, die gegenüber der bekannten Anordnung bei erleichterter Montage und Demontage der Zierleiste sowie vereinfachter Querschnittsstruktur des Dichtungsprofils weniger Bauraum erfordert.

Dichtungsprofil 1' ermöglicht. Weitere, der eingangs erwähnten Anordnung ähnliche Anordnungen mit einer Formschlussverbindung zwischen einem Dichtungsprofil und einer Zierleiste gehen aus der DE 10 2010 039 774 A1 sowie der WO 2009/146742 A1 hervor. Eine Anordnung, die sämtliche der eingangs erwähnten Merkmale aufweist, beschreibt die EP 2 363 324 A1, wobei zudem die Endabschnitte in der Verbindungsstellung mit einer Seite jeweils gegen eine Anlagefläche des Dichtungsprofils anliegen und mit jeweils einer dieser Seite abgewandten Seite dem freien Ende der betreffenden Zunge gegenüberliegen, wobei die Zunge widerhakenartig nur mit dem freien Ende gegen den Endabschnitt vorsteht.

Der vorliegenden Erfindung liegt die Aufgabe zugrunde, eine neue Anordnung der eingangs genannten Art aus einem Dichtungsprofil und einer mit dem Dichtungsprofil verbindbaren Zierleiste zu schaffen, die gegenüber der bekannten Anordnung bei erleichterter Montage und Demontage der Zierleiste sowie vereinfachter Querschnittsstruktur des Dichtungsprofils weniger Bauraum erfordert.

Die diese Aufgabe lösende Anordnung nach der Erfindung ist dadurch gekennzeichnet, dass wenigstens eine der Zungen mit ihrer Mittelachse senkrecht auf dem betreffenden Endabschnitt steht.

Vorteilhaft kann die Verbindung zwischen Zierleiste und Dichtungsprofil bauraumsparend allein unter Verformung der elastischen Zungen bei verhältnismäßig geringer Andruckkraft erfolgen, während die in der Verbindungsstellung nach Rückstellung den Verbindungsvorsprüngen widerhakenartig entgegenstehenden Zungen dafür sorgen, dass die Zierleiste sicher an dem Dichtungsprofil gehalten wird.

Die von dem Zwischenabschnitt vorstehenden Zungen spreizen sich in Andruckrichtung zweckmäßig auf und sind z.B. zur Andruckrichtung um 45 ° geneigt.

Die Verbindungsvorsprünge können Endabschnitte mit zueinander parallelen Seiten umfassen.

Von wenigstens einer der Anlageflächen können Erhebungen vorstehen, welche die Flächenpressung und damit die Haltekraft erhöhen.

In einer weiteren Ausführungsform ist die Zierleiste mit dem Dichtungsprofil unter Verformung des Dichtungsprofils verbunden. Vorteilhaft steht die Profilleiste damit unter Spannung, welche einen spielfreien Halt der Zierleiste an dem Dichtungsprofil ermöglicht.

In weiterer Ausgestaltung der Erfindung weist wenigstens eine der Zungen eine Gleitschicht auf, welche die elastische Abbiegung durch die Verbindungsvorsprünge erleichtert und insbesondere eine sichere Rückstellung sichert.

Die Zungen können aus einem flexibleren Material als der angrenzende Zwischenabschnitt des Dichtungsprofils bestehen. Umgekehrt könnten in einer Ausführungsform die Zungen aus einem härteren, weniger flexiblen Elastomermaterial als der Zwischenabschnitt gebildet sein.

An der Zierleiste können insbesondere einander entgegenwirkende Drehmomente angreifen.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: eine Anordnung nach der Erfindung,
- Fig. 2: eine Detaildarstellung der Anordnung von Fig 1.,
- Fig. 3: eine die Verbindung einer Zierleiste mit einem Dichtungsprofil unter Vorspannung erläuternde Darstellung,
- Fig. 4: eine Detailansicht einer Anordnung entsprechend einem zweiten Ausführungsbeispiel,
- Fig. 5: ein drittes Ausführungsbeispiel für eine Anordnung nach der Erfindung, und
- Fig. 6: eine Anordnung nach dem Stand der Technik.

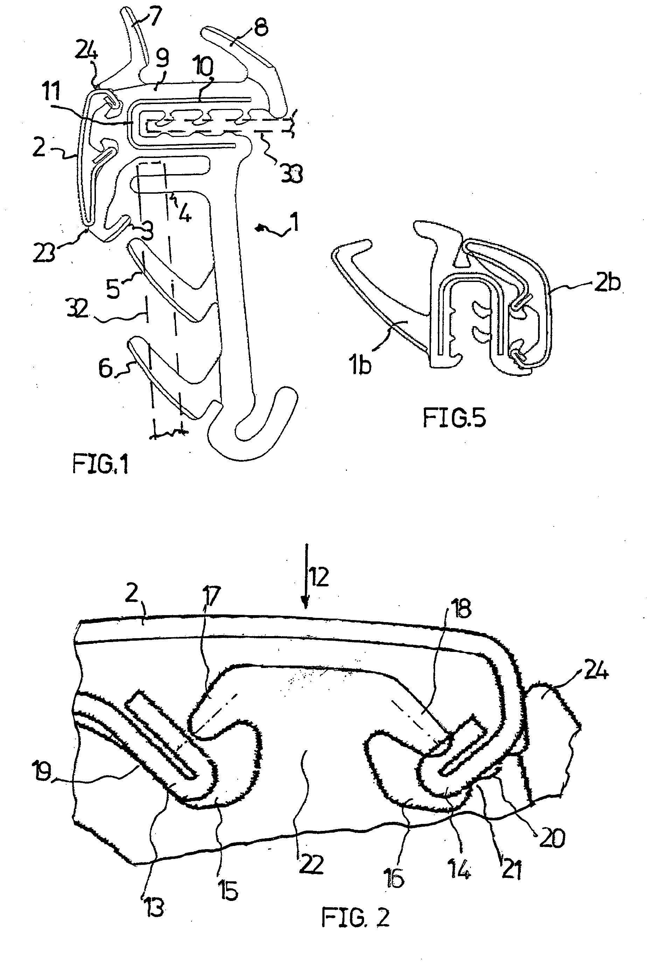

- Ein in Fig. 1 und 2 als Beispiel gezeigtes Dichtungsprofil 1 ist mit einer Zierleiste 2 verbunden. Das Dichtungsprofil 1 dient einer Abdichtung des gebogenen oberen Randes einer Fahrzeugfensterscheibe 34 und umfasst neben Dichtungslippen 3 bis 8 einen Befestigungsabschnitt 9 mit einer metallischen Verstärkungseinlage 10. Der U-förmige Befestigungsabschnitt 9 ist zur Befestigung des Dichtungsprofils an der Fahrzeugkarosserie auf einen Karosserieflansch aufsteckbar.

Die gegenüberliegend einem Basisschenkel 11 des U-förmigen Befestigungsabschnitts 9 an dem Dichtungsprofil 1 angebrachte Zierleiste 2 besteht in dem gezeigten Ausführungsbeispiel aus gerolltem Blech und ist, wie ggf. auch das Dichtungsprofil 1, entsprechend dem Verlauf des oberen Randes der abzudichtenden Fahrzeugfensterscheibe 34 gebogen. Neben dem rollgeformten Metallprofil kommt für die Zierleiste z.B. auch ein stranggepresstes Aluminium oder ein Kunststoffprofil in Betracht.

Die Zierleiste 2 lässt sich durch Andrücken gemäß Pfeil 12, d.h. in einer Richtung etwa senkrecht zu dem Basisschenkel 11 des Dichtungsprofils 1 in die in Fig. 1 und 2 gezeigte Verbindungsstellung bringen, wie weiter unten erläutert ist.

Die Zierleiste 2 weist Verbindungsvorsprünge auf, welche zu der Andruckrichtung gemäß Pfeil 12 schräg aufeinander zu verlaufende, durch je zwei Blechlagen gebildete Endabschnitte 13 und 14 umfassen. Die Endabschnitte 13 und 14 greifen in hinterschnittene Rillenausnehmungen 15 und 16 in dem Dichtungsprofil 1 ein.

Die Rillenausnehmungen 15,16 sind durch vorstehende Zungen 17,18 gebildet, deren Mittellinien in der gezeigten Verbindungsstellung etwa senkrecht auf den Endabschnitten 13,14 stehen. Die Zungen 17,18 stehen schräg von einem zwischen den Rillenausnehmungen 15,16 verbliebenen Zwischenabschnitt 22 des Dichtungsprofils 21 vor.

Der Endabschnitt 13 liegt gegen eine Anlagefläche 19 des Dichtungsprofils 1 an. Zur Abstützung des Endabschnitts 14 dient eine Anlagefläche 20 mit zwei Erhebungen 21.

Der zwischen den hinterschnittenen Rillenausnehmungen 15,16 gelegene Zwischenabschnitt 22 des Dichtungsprofils 1 ist massiv aus Vollmaterial gebildet.

Zur Herstellung der in Fig. 1 und 2 gezeigten Verbindung zwischen dem Dichtungsprofil 1 und der Zierleiste 2 wird die Zierleiste 2 gemäß Pfeil 12 an das Dichtungsprofil 1 angesetzt und aufgedrückt, bis die Endabschnitte 13,14 gegen die Anlageflächen 19,20 zum Anschlag kommen. Während dieses Andrückvorgangs wurden die Zungen 17,18 durch die Endabschnitte 13,14 elastisch abgebogen und sind infolge ihrer elastischen Rückstellkraft wieder in die in Fig. 1 und 2 gezeigte Verbindungsposition gelangt. In dieser Position stehen die Zungen widerhakenartig mit ihrer Mittellinie etwa senkrecht gegen die Endabschnitte 13,14 der Verbindungsvorsprünge der Zierleiste vor. Ungewolltes Lösen der Zierleiste 2 von dem Dichtungsprofil 1 ist aufgrund dieser Widerhakenwirkung weitgehend ausgeschlossen.

An den Seitenrändern der Zierleiste 1 vorspringende Nasen 23,24 sichern auch bei ungünstigem Zusammenkommen von Fertigungstoleranzen für eine optisch einwandfreie Verbindung zwischen den Teilen.

Wie Fig. 3 erkennen lässt, liegt ein Teil 25 der Zierleiste 2 gegen einen Abschnitt 26 des Dichtungsprofils 1 an, der bei der vorangehend beschriebenen Verbindung zwischen Zierleiste und Dichtungsprofil aus der Stellung I in die durch eine Strichlinie 27 angedeutete Stellung II abgebogen wird. Hierdurch entsteht gemäß Pfeil 28 ein Drehmoment. Das erzeugte Gegenmoment sichert auch bei ungünstiger Kombination von Fertigungstoleranzen, dass die Zierleiste 2 spielfrei mit der dem Dichtungsprofil 1 verbunden ist.

Fig. 4 zeigt in einem Ausschnitt ein Ausführungsbeispiel, bei dem eine Zunge 17a in einem Bereich, in dem sie mit einem Endabschnitt 13 der Zierleiste 2 in Berührung kommt, mit einer Gleitschicht 29 versehen ist, welche insbesondere die Rückstellung der Zunge 17a in die in Fig. 4 gezeigte Befestigungsposition begünstigt.

Die Zunge 17a besteht ferner aus einem flexibleren Elastomermaterial als ein angrenzender Zwischenbereich 22a. Eine Materialgrenze ist bei 30. gebildet.
Es versteht sich, dass die anhand der Zunge 17a beschriebenen Maßnahmen auch bei der zweiten, nicht gezeigten Zunge verwirklicht sein können.

Fig. 5 zeigt ein Ausführungsbeispiel einer Anordnung aus einem eine Fensterschachtleiste bildenden Dichtungsprofil 1b und einer auf das Dichtungsprofil 1b aufgesteckten Zierleiste 2b.

## Patentansprüche

1. Anordnung aus einem Dichtungsprofil (1) einer Fahrzeugkarosseriedichtung und einer Zierleiste (2), die unter Andrücken der Zierleiste senkrecht zur Profillängsrichtung gegen das Dichtungsprofil (1) mit dem Dichtungsprofil (1) verbindbar ist, wobei von der Zierleiste (2) zwei in Leistenlängsrichtung zueinander parallel und im Abstand verlaufende Verbindungsvorsprünge (13,14) vorstehen, das Dichtungsprofil (1) in Profillängsrichtung verlaufende Rillenausnehmungen (15,16) zur Aufnahme je eines Verbindungsvorsprungs (13,14) aufweist, die Verbindungsvorsprünge (13,14) entgegen der Andruckrichtung (12) und die Rillenausnehmungen (15,16) in Andruckrichtung (12) gesehen hinterschnitten und die Hinterschneidungen der Rillenausnehmungen (15,16) durch Rippenvorsprünge (17,18) für den Eingriff in je eine Hinterschneidung der Verbindungsvorsprünge (13,14) gebildet sind, wobei die Rippenvorsprünge als beim Andrücken der Zierleiste (2) an das Dichtungsprofil (1) durch die Verbindungsvorsprünge (13,14) elastisch abbiegbare, in der Verbindungsstellung nach Rückstellung widerhakenartig gegen die Verbindungsvorsprünge (13,14) vorstehende Zungen (17,18) ausgebildet sind, **dadurch gekennzeichnet, dass** der zwischen den Rillenausnehmungen (15,16) angeordnete Zwischenbereich (22) des Dichtungsprofils (1), von welchem die Zungen (17,18) seitlich vorstehen, aus Vollmaterial besteht, und wobei die Verbindungsvorsprünge (13,14) in Andruckrichtung (12) aufeinander zulaufende Endabschnitte (13,14) umfassen, wobei die Endabschnitte (13,14) in der Verbindungsstellung mit einer Seite jeweils gegen eine Anlagefläche (19,20) des Dichtungsprofils (1) und jeweils mit einer dieser Seite abgewandten Seite dem freien Ende der betreffenden Zunge (17,18) gegenüberliegen und die Zunge (17,18) nur mit dem freien Ende widerhakenartig gegen den Endabschnitt (13,14) vorsteht, und dass wenigstens eine der Zungen (17,18) mit ihrer Mittelachse senkrecht auf der Seite des betreffenden Endabschnitts (13,14) steht.

2. Anordnung nach Anspruch 1,
**dadurch gekennzeichnet,**
**dass** sich die Zungen (17,18) in Andruckrichtung (12) aufspreizen.

3. Anordnung nach einem der Ansprüche 1 oder 2,
**dadurch gekennzeichnet,**
**dass** wenigstens eine der Anlageflächen (19,20) vorstehende Erhebungen (21) aufweist.

4. Anordnung nach einem der Ansprüche 1 bis 3,
**dadurch gekennzeichnet,**
**dass** das Dichtungsprofil (1) in der Verbindungsstellung durch die Zierleiste (2) unter Sicherung einer spielfreien Verbindung zwischen dem Dichtungsprofil (1) und der Zierleiste (2) verformt ist.

5. Anordnung nach einem der Ansprüche 1 bis 4,
**dadurch gekennzeichnet,**
**dass** wenigstens eine der Zungen (17,18) mit einer Gleitschicht (29) versehen ist.

6. Anordnung nach einem der Ansprüche 1 bis 5,
**dadurch gekennzeichnet,**
**dass** wenigstens eine der Zungen (17,18) aus einem Material besteht, dass flexibler als das an die Zunge (17,18) angrenzende Material des Dichtungsstrangs (1) ist.

## Claims

1. Arrangement consisting of a seal profile (1) of a vehicle body seal and a trim strip (2) which, with pressing of the trim strip perpendicularly with respect to the profile longitudinal direction against the seal profile (1), can be connected to the seal profile (1), whereas two connecting projections (13, 14) which run in the strip longitudinal direction parallel to one another and at a spacing project from the trim strip (2), the seal profile (1) having groove recesses (15, 16) which run in the profile longitudinal direction for receiving in each case one connecting projection (13, 14), the connecting projections (13, 14) being undercut counter to the pressing direction (12) and the groove recesses (15, 16) being undercut as viewed in the pressing direction (12), and the undercuts of the groove recesses (15, 16) being formed by way of rib projections (17, 18) for engagement into in each case one undercut of the connecting projections (13, 14), the rib projections being configured as tongues (17, 18) which can be bent away elastically by way of the connecting projections (13, 14) during the pressing of the trim strip (2) onto the seal profile (1) and which project in a barb-like manner against the connecting projections (13, 14) after returning to the original shape in the connecting position, **characterized in that** that intermediate region (22) of the seal profile (1) which is arranged between the groove recesses (15, 16) and from which the tongues (17, 18) project laterally consists of solid material, and the connecting projections (13, 14) comprising end sections (13, 14) which taper towards one another in the pressing direction (12), the end sections (13, 14) lying, in the connecting position, with one side in each case against a bearing face (19, 20) of the seal profile (1) and in each case with a side which faces away from the said side opposite the free end of the relevant tongue (17, 18), and the tongue (17, 18) projecting only with the free end in a barb-like manner against the end section (13, 14), and **in that** at least one of the tongues (17, 18) lies with its centre axis perpendicularly on the side of the relevant end section (13, 14).

2. Arrangement according to Claim 1, **characterized in that** the tongues (17, 18) spread open in the pressing direction (12).

3. Arrangement according to either of Claims 1 and 2, **characterized in that** at least one of the bearing faces (19, 20) has projecting elevations (21).

4. Arrangement according to one of Claims 1 to 3, **characterized in that**, in the connecting position, the seal profile (1) is deformed by way of the trim strip (2) with securing of a play-free connection between the seal profile (1) and the trim strip (2).

5. Arrangement according to one of Claims 1 to 4, **characterized in that** at least one of the tongues (17, 18) is provided with a sliding layer (29).

6. Arrangement according to one of Claims 1 to 5, **characterized in that** at least one of the tongues (17, 18) consists of a material which is more flexible than that material of the seal strip (1) which adjoins the tongue (17, 18).

## Revendications

1. Ensemble constitué d'un profilé d'étanchéité (1) d'un joint de carrosserie de véhicule et d'une baguette décorative (2) qui peut être reliée au profilé d'étanchéité (1) par application de pression de la baguette décorative contre le profilé d'étanchéité (1) perpendiculairement à la direction longitudinale du profilé,
dans lequel
deux saillies de liaison (13, 14) s'étendant parallèlement l'une à l'autre dans la direction longitudinale de la baguette et espacées l'une de l'autre font saillie de la baguette décorative (2),
le profilé d'étanchéité (1) présente des évidements en rainure (15, 16) s'étendant dans la direction longitudinale du profilé pour recevoir chacun une saillie de liaison (13, 14),
les saillies de liaison (13, 14) sont réalisées en contre-dépouille dans le sens opposé à la direction de pression (12) et les évidements en rainure (15, 16) sont réalisés en contre-dépouille dans la direction de pression (12), et les contre-dépouilles des évidements en rainure (15, 16) sont formées par des saillies en forme de nervure (17, 18) pour l'engagement dans une contre-dépouille respective des saillies de liaison (13, 14),
les saillies en forme de nervure sont réalisées sous forme de languettes (17, 18) qui peuvent être fléchies élastiquement lorsque la baguette décorative (2) est pressée contre le profilé d'étanchéité (1) par les saillies de liaison (13, 14) et, en position de liaison, font saillie à la manière d'un ardillon contre les saillies de liaison (13, 14), après leur retour,
**caractérisé en ce que**
la zone intermédiaire (22) du profilé d'étanchéité (1), qui est disposée entre les évidements en rainure (15, 16) et dont les languettes (17, 18) font saillie latéralement, est constituée d'un matériau plein, et
les saillies de liaison (13, 14) comprennent des embouts d'extrémité (13, 14) qui convergent dans la direction de pression (12),
en position de liaison, les embouts d'extrémité (13, 14) sont disposés en étant opposés par un côté à une surface d'appui respective (19, 20) du profilé d'étanchéité (1) et par un côté, détourné dudit côté, à l'extrémité libre de la languette concernée (17, 18), et
la languette (17, 18) fait saillie seulement par l'extrémité libre à la manière d'un ardillon contre l'embout d'extrémité (13, 14), et
l'une au moins des languettes (17, 18) a son axe central perpendiculaire au côté de l'embout d'extrémité concerné (13, 14).

2. Ensemble selon la revendication 1,
**caractérisé en ce que**
les languettes (17, 18) s'écartent dans la direction de pression (12).

3. Ensemble selon l'une des revendications 1 à 2,
**caractérisé en ce que**
l'une au moins des surfaces d'appui (19, 20) présente des bossages (21) en saillie.

4. Ensemble selon l'une des revendications 1 à 3,
**caractérisé en ce que**
en position de liaison, le profilé d'étanchéité (1) est déformé par la baguette décorative (2) tout en assurant une liaison sans jeu entre le profilé d'étanchéité (1) et la baguette décorative (2).

5. Ensemble selon l'une des revendications 1 à 4,
caractérisé en que
l'une au moins des languettes (17, 18) est pourvue d'une couche de glissement (29).

6. Ensemble selon l'une des revendications 1 à 5,
**caractérisé en ce que**
l'une au moins des languettes (17, 18) est constituée en un matériau plus flexible que le matériau du cordon d'étanchéité (1) adjacent à la languette (17, 18).
